(19) Europäisches Patentamt
European Patent Office
Office européen des brevets

(11) **EP 2 742 160 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(21) Anmeldenummer: **12728191.3**

(22) Anmeldetag: **15.06.2012**

(51) Int Cl.:
*C22C 9/04* *(2006.01)*     *C22C 1/10* *(2006.01)*
*A01K 75/00* *(2006.01)*

(86) Internationale Anmeldenummer:
**PCT/EP2012/002524**

(87) Internationale Veröffentlichungsnummer:
**WO 2013/023718 (21.02.2013 Gazette 2013/08)**

(54) **VERWENDUNG EINER KUPFERLEGIERUNG ZUR AUFZUCHT VON MEERESTIEREN**

USE OF A COPPER ALLOY FOR GROWING SEA ANIMALS

UTILISATION D'UN ALLIAGE DE CUIVRE POUR L'ÉLEVAGE DES ANIMAUX MARINS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2011 DE 102011110589**
**08.02.2012 DE 102012002450**

(43) Veröffentlichungstag der Anmeldung:
**18.06.2014 Patentblatt 2014/25**

(73) Patentinhaber: **Wieland-Werke AG**
**89079 Ulm (DE)**

(72) Erfinder:
• **KÄUFLER, Andrea**
**89231 Neu-Ulm (DE)**
• **AUFRECHT, Jochen**
**71106 Magstadt (DE)**

(56) Entgegenhaltungen:
**DE-A1- 4 233 668     JP-A- 10 152 735**
**JP-A- 2005 060 773**

EP 2 742 160 B1

**Beschreibung**

Die Erfindung betrifft eine Verwendung einer Kupferlegierung gemäß dem Oberbegriff des Anspruchs 1.

In der maritimen Fischzucht werden heute beschichtete oder unbeschichtete Polymernetze sowie Stahlkäfige eingesetzt. Ein prinzipielles Problem stellt dabei der Bewuchs der Netze durch Mikro- und Makroorganismen, dem sogenannten Biofouling dar. Weitere Anforderungen an Materialien, die für die Herstellung von Netzgehegen für Aquakulturen verwendet werden, sind eine gute chemische Beständigkeit in Meerwasser sowie eine hohe mechanische Festigkeit, um kurzzeitigen Lastspitzen, zum Beispiel durch den Aufprall von Treibgut oder einen Angriff von Raubtieren, widerstehen zu können.

Eine signifikante Weiterentwicklung bestehender Lösungen tritt nur ein, wenn zahlreiche Anforderungen an den Werkstoff gleichzeitig erfüllt sind. Kupferbasislegierungen besitzen prinzipiell ein großes Potential, den Anforderungen gegenüber einem chemischen Angriff, einem Bewuchs durch Mikro- und Makroorganismen (Biofouling) und einer mechanischen Belastung zugleich gerecht zu werden. Seit einigen Jahren werden sie auch in Versuchsanlagen erprobt. Erfahrungen wurden bereits mit einem zinnhaltigen Sondermessing gesammelt. Diese Legierung wird beispielsweise in der Druckschrift EP 1 777 311 A1 näher beschrieben. Außerdem kommen die Kupfer-Nickellegierung CuNi10Fe1 Mn und Silizium-Bronzen zum Einsatz.

Besonders geeignet für die Anwendung in Meerwasser sind Legierungen aus der Gruppe der sogenannten Admiralitätsmessinge. Hierbei handelt es sich auch um Cu-Zn-Legierungen, deren Korrosionsbeständigkeit in Meerwasser durch Zugabe von Sn und eines Elements der Gruppe As, P oder Sb verbessert wird. Beispiele sind die Legierungen C44300, C44400 und C44500.

Des Weiteren ist aus der Druckschrift EP 1 290 234 B1 zudem eine Kupferlegierung bekannt, die bereits für die Elektronikindustrie eine kostengünstigere Alternative zu sonst üblichen Kupferlegierungen mit hoher elektrischer Leitfähigkeit, hoher Zugfestigkeit und hoher Umformfestigkeit ausweist. Die Legierung besteht aus 13 bis 15 % Zink, 0,7 bis 0,9 % Zinn, 0,7 bis 0,9 % Eisen und einen Restausgleich an Kupfer. Aufgrund des Zinks, mit einem derzeit am Markt vergleichsweise geringen Metallwert, können Kosten im Grundmaterial eingespart werden.

Auch ist aus der Patentschrift US 3,816,109 eine Kupferlegierung bekannt, die einen Zinkanteil von maximal 15,0 % aufweist. Der Eisengehalt liegt zwischen 1,0 und 2,0 %. Mit dieser Zusammensetzung wird eine für elektronische Anwendungen vergleichsweise gute elektrische Leitfähigkeit in Verbindung mit einer ausreichenden Zugfestigkeit erzielt.

Weiter sind aus der Patentschrift US 6,132,528 Kupfer-Zinn-Eisen-Zink-Legierungen bekannt, die einen höheren Zink-Gehalt von bis zu 35,0 % aufweisen. Der Eisenanteil liegt zwischen 1,6 und 4,0 %. Die Eisenzugabe hat dabei die Funktion, eine Kornfeinung bereits nach dem Gießen zu erzielen. Zudem ist aus der Druckschrift JP 10 152735 A eine seewasserbeständige Kupfer-Zink-Legierung bekannt, die 0,2 - 1,0 % Sn, 0,02 - 0,15 % Sb und optional 0,1 - 1,0 % Ni, 0,02 - 0,15 % P und/oder 0,05 - 0,8 % Fe enthält.

Der Erfindung liegt die Aufgabe zugrunde, besonders geeignete Legierungen zur maritimen Fischzucht bereitzustellen.

Die Erfindung wird durch die Merkmale des Anspruchs 1 wiedergegeben. Die weiteren rückbezogenen Ansprüche geben vorteilhafte Aus- und Weiterbildungen der Erfindung wieder.

Die betrifft die in Anspruch 1 definierte Verwendung.

Die Erfindung geht dabei von der Überlegung aus, dass es sich bei der Aufzucht insbesondere um Fische sowie auch Krustentiere und Muscheln handelt. Hierzu wird eine sogenannte Aquakultur betrieben, mit der eine kontrollierte Aufzucht von aquatischen Organismen im Meer verfolgt wird. Sie basiert meistens auf Netzgehegen im Meer, in denen beispielsweise Lachse oder andere Speisefische aufgezogen werden.

Der Zinkgehalt zwischen 15,5 und 32,0 % wird in der Legierung insbesondere nach dem Kriterium ausgewählt, dass eine leicht umformbare, einphasige Legierung erhalten wird. Das einphasige Basisgefüge besteht dabei aus Alphaphase. Auch muss das Basisgefüge geeignet sein, möglichst feine Ausscheidungen anderer Elemente aufzunehmen. Für Zinkgehalte zwischen 32,0 % und 36,0 % kann bis zu einem gewissen Grad noch eine weitere ß-Phase vorkommen, die jedoch durch eine Temperaturbehandlung reduziert werden kann. Der Zinkgehalt sollte dabei 36,0 % nicht übersteigen, da sich sonst eine ungünstigere Phasenbeschaffenheit in der Legierung einstellt. Insbesondere bei über den angegebenen Wert hinausgehenden Zinkgehalten tritt die in diesem Zusammenhang unerwünschte spröde Gammaphase auf. Andererseits zeigen umfangreiche Untersuchungsergebnisse einer Legierungsvariante mit weit über 30,0 % Zink, dass die gewünschten Eigenschaften noch sichergestellt sind. Eine wichtige Eigenschaft der Legierung ist ihre Beständigkeit gegen Korrosionsangriff und gute Verarbeitbarkeit. Andererseits sind auch wirtschaftliche Aspekte bei der erfindungsgemäßen Lösung zu nennen. So ist derzeit das Element Zink im Markt noch ausreichend günstig zu beziehen und verfügbar, um damit im Metallpreis günstigere Legierungen herzustellen, deren Eigenschaften an bisher bekannte Legierungen zumindest heranreicht. So besitzen die erfindungsgemäßen Legierungen einen geringeren Metallwert als herkömmliche Kupfer-Nickel-Legierungen bzw. Siliziumbronzen. An diesen Legierungen sollen sich auch die Materialeigenschaften orientieren.

Aus technischer Sicht wirkt sich ein in der erfindungsgemäßen Legierung höherer Zinngehalt auf die Festigkeit und Korrosionsbeständigkeit aus. Auf der anderen Seite sollte der Zinngehalt 3,0 % nicht übersteigen, da die Biegbarkeit hiervon negativ beeinflusst wird. Prinzipiell soll die Zinnkonzentration so niedrig wie möglich gehalten werden, bei einem Anteil unter 0,35 % ist jedoch kein wesentlicher Einfluss auf die Legierungseigenschaften mehr zu erwarten.

Durch Zugabe geeigneter Anteile an Fe und P können in Cu-Zn-Sn-Legierungen Phosphide in Form von Ausscheidungspartikeln gebildet werden. Hierbei handelt es sich entweder um Eisenphosphide oder um Mischphosphide, beispielsweise mangan-, nickel-, cobalthaltige-Phosphide. Es können auch Kupferphosphide vorliegen. Zudem können sich zusätzlich auch Eisenpartikel in der Legierungsmatrix ausscheiden.

Eisen ist für die Bildung von Ausscheidungsteilchen und damit für eine Verbesserung der Festigkeitseigenschaften im Vergleich zu üblichen Admiralitätsmessingen verantwortlich. Die Ausscheidungsbildung kann während des Fertigungsprozesses gesteuert und optimiert werden. Insbesondere bilden sich Ausscheidungen in dieser Legierung während einem Warmumformschritt und der darauffolgenden Abkühlung. Die in der Legierung wirksamen Härtungsmechanismen werden in erster Linie durch das Element Eisen getragen. Die in der Legierungsmatrix vorhandenen eisenhaltigen Partikel bilden sich dabei vorzugsweise im Submikrometerbereich aus.

Um die Entzinkungsbeständigkeit der Legierung zu gewährleisten, ist es von Bedeutung, das Verhältnis des Phosphorgehalts zum Eisengehalt nicht zu gering zu wählen, da sonst der gesamte im $\alpha$-Mischkristall gelöste Phosphor, der als Entzinkungsinhibitor wirkt, in Form von Eisenphosphiden abgebunden wird. In dieser Form ist seine entzinkungshemmende Wirkung nicht mehr gegeben. Es hat sich erwiesen, dass sich in der Prüfung auf Entzinkungsbeständigkeit Legierungen als beständig erweisen, bei denen für das Verhältnis P/Fe gilt: [P]/[Fe] > 0,25.

Als Wahlelemente eignen sich auch die Elemente As und Sb, die entzinkungshemmende Wirkung haben. Es ist ferner angedacht, dass auch As und Sb mit Fe Verbindungen bilden, die der Partikelhärtung einer Cu-Znbasierten Legierung mit $\alpha$-Mischkristall-Struktur dienen könnten. Es ist ferner angedacht, dass Co, Mn und Ni mit P, As und Sb solche Verbindungen bilden können. Es kann auch ein gewisser Anteil Al, Mn, Ni und Si die Korrosionsbeständigkeit von Cu-basierten Legierungen in Meerwasser erhöhen.

Bei der erfindungsgemäßen Legierung liegt besonderes Gewicht auf deren Mikrostruktur, die aufgrund einer geeigneten Kombination unterschiedlicher ,Walz-, Press- oder auch Ziehprozesse beruht. Derartige Umformungen können einerseits Warmumformprozesse in Verbindung mit weiteren Kaltumformschritten und Zwischenglühungen sein. Die Ausbildung der erfindungsgemäßen Legierung muss prozesstechnisch dabei genau auf die Ausbildung der fein verteilen eisenhaltigen Partikel in Verbindung mit den jeweiligen Umformgraden abgestimmt sein. Nur so kann das Optimum der erwarteten Eigenschaftskombinationen erreicht werden.

Ein besonderer Vorteil der erfindungsgemäßen Lösung ergibt sich aus einer signifikanten Verbesserung gegenüber den bisher bestehenden Lösungen, wobei mehrere Anforderungen an den Werkstoff gleichzeitig erfüllt sind:

- Korrosionsbeständigkeit in See-, Brack- oder Süßwasser;
- Beständigkeit gegen Bewuchs unter Wasser (Biofouling);
- Hohe Zugfestigkeit, um das Eigengewicht der Geflechte bzw. Gitter zu tragen und um Attacken von Meeresräubern abwehren zu können;
- Ermüdungsbeständigkeit gegen die zyklische Beanspruchung durch Wellengang oder Strömung;
- Hohe Verschleißbeständigkeit, falls Geflechte eingesetzt werden, bei denen eine Relativbewegung zwischen den einzelnen Drähten möglich ist.

Aufgrund der Partikel besitzt die Legierung bei ähnlicher Seewasserbeständigkeit eine höhere Festigkeit durch Ausscheidungshärtung in Verbindung mit Kornfeinung. Somit können aus dieser Legierung Drähte und Metallbänder für die Verwendung zur Herstellung von Käfigen für den Einsatz in Aquakulturen als Ausgangsmaterial dienen, die eine gegenüber herkömmlichen Admiralitätsmessingen höhere Festigkeit besitzen.

Daraus ergibt sich die Möglichkeit, Käfige größerer Stabilität und Lebensdauer herzustellen, oder alternativ den Drahtdurchmesser bzw. die Banddicke zu reduzieren, um Material einzusparen. Insbesondere liegt die erhöhte Festigkeit bereits im weichgeglühten Zustand vor, der für Verarbeitungsschritte wie zum Beispiel die Geflechtherstellung besonders günstig ist. Die harten Phosphid-Partikel erhöhen zudem die Verschleißbeständigkeit der Legierung.

Vorteilhafterweise kann der Gehalt von Eisen von 0,55 bis 1,5 % betragen. In weiterer bevorzugter Ausgestaltung der Erfindung kann der Gehalt von Zinn 0,7 bis 1,5 % und von Eisen von 0,55 bis 0,7 % betragen. Ein geringerer Zinngehalt in den angegebenen Grenzen ist deshalb besonders vorteilhaft, weil hierdurch in erster Linie die Biegbarkeit der Legierung weiter verbessert wird. Der angegebene Eisengehalt ist so ausgewählt, dass sich besonders feine eisenhaltige Partikel in der Legierungsmatrix ausbilden können. Diese Partikel haben allerdings immer noch die Größe, um die mechanischen Eigenschaften wesentlich zu verbessern.

Vorteilhafterweise kann der Zinkgehalt zwischen 21,5 bis 36,0 % betragen. Insbesondere in diesem Bereich ist noch gesichert, dass die gewünschte vorwiegend aus Alphaphase bestehende Legierung hergestellt werden kann. Derartige Legierungen sind leichter umformbar und noch geeignet für eine feine Ausscheidungsverteilung der eisenhaltigen Partikel. Des Weiteren kann vorteilhafterweise der Zinkgehalt zwischen 26,5 bis 35,0 % betragen. Für eine erfindungsgemäße Verwendung hat sich neben der breiteren Angabe der Legierungszusammensetzung insbesondere die Kupfer-Zink-Legierung CuZn28Sn1Fe0,25P0,2, aber auch CuZn34Sn1Fe0,25P0,2 als ausgewählte Legierung besonders geeignet erwiesen. Es handelt sich in erster Linie um Band, Draht oder rohrförmiges Material mit den Hauptbestandteilen Kupfer, Zink, Zinn, Eisen und Phosphor.

Vorteilhafterweise kann für das Verhältnis des Gehalts an P, As, Sb und des Gehalts an Fe, Ni, Mn, Co gelten: [P + As + Sb]/[Fe + Ni + Mn + Co] > 0,25. Die weiteren wahlweise in der Legierung enthaltenen Elemente können im Hinblick auf die Prozessführung auch eine weitere Eigenschaftsverbesserung, der Legierung bewirken oder auch beim Herstellungsprozess in der schmelzflüssigen Phase ihre Wirkung zeigen. Insbesondere die Entzinkungsbeständigkeit wird durch Einhaltung des angegebenen Verhältnisses sichergestellt. Eine weitere Schlüsseleigenschaft ist bei Bändern und Drähten die Biegbarkeit, die sich insbesondere bei höheren Zinkgehalten verbessert. Die Untersuchungsergebnisse zeigen, dass sowohl für niedrige wie auch für hohe Zinkgehalte in etwa gleich gute Korrosionsbeständigkeit der Legierung vorliegt. Wesentlich dabei ist, dass bei der erfindungsgemäßen Legierung die Zugfestigkeit deutlich gegenüber den üblichen Messingen verbessert wird.

Vorteilhafterweise kann die mittlere Korngröße der Legierungsmatrix kleiner als 20 $\mu$m betragen. Durch die Kombination der Korngröße der Legierungsmatrix in Verbindung mit der Größe der fein verteilten eisenhaltigen Partikel und deren Verteilung lässt sich ein Optimum der Legierungseigenschaften im Hinblick auf deren mechanischen Belastbarkeit und Biegbarkeit erzielen.

In bevorzugter Ausführungsform kann eine Verwendung für Netze, Gewebe, Geflechte und Gitter angedacht sein, die aus Drähten oder aus Metallbändern hergestellt werden.

In weiterer bevorzugter Ausführungsform können Stangen, Profile oder Profilrohre zur Befestigung oder Stabilisierung verwendet werden.

Vorteilhaft können Rohre oder Hohlprofile verwendet werden, die als Befestigungselemente, Schwimmkörper oder Versorgungs- und Entsorgungsleitungen eingesetzt werden.

Im Folgenden werden die Eigenschaften von Mustern aus diesen Legierungen beschrieben (Tabelle 1). Die Muster wurden hergestellt durch Schmelzen der Legierungsbestandteile in einem Graphittiegel nach dem Tammann-Verfahren und anschließendem Abguss in quaderförmige Stahlkokillen. Die erhaltenen Blöcke wurden an 22 mm gefräst und an 12 mm warmgewalzt. Anschließend wurde durch Kaltwalzen, gegebenenfalls mit Zwischenglühungen, Bandmaterial der Enddicke 1,0 mm hergestellt. Die hergestellten Muster wurden verschiedenen Prüfungen unterzogen, die die besondere Eignung der erfindungsgemäßen Legierung belegen sollen.

Tab. 1: Chemische Zusammensetzung der Beispiele und Vergleichsbeispiele [in Gew.-%]

|  | Vergleichsbeispiel 1 | Vergleichsbeispiel 2 | Beispiel 1 | Beispiel 2 |
|---|---|---|---|---|
|  | CuZn28Sn1P0,02 | CuZn30Sn1Fe0,6P0,02 | CuZn28Sn1Fe0,25P0,2 | CuZn23.5Sn1Fe0,6P0,2 |
| Cu | 71,20 | 68,35 | 70,57 | 74,77 |
| Zn | 27,57 | 30,05 | 27,92 | 23,45 |
| Sn | 1,20 | 1,02 | 1,05 | 1,04 |
| Fe | 0,00 | 0,55 | 0,24 | 0,59 |
| P | 0,02 | 0,02 | 0,22 | 0,19 |

Tabelle 2 zeigt die mechanischen Eigenschaften der teilchengehärteten Legierung gemäß Beispiel 1 im Vergleich zur teilchenfreien Legierung gemäß Vergleichsbeispiel 1 (Legierung C44500, Stand der Technik). Beide Muster lagen in 100 % rekristallisiertem Zustand vor, der durch eine Glühbehandlung bei einer Temperatur von 500°C für die Dauer von 3 h nach dem letzten Kaltwalzschritt eingestellt wurde. Dieser Zustand ist besonders günstig für die Herstellung von gewobenen Netzstrukturen, da das Umformvermögen von Metallen in vollständig rekristallisiertem Zustand besonders groß ist. Es ist zu erkennen, dass die teilchengehärtete Legierung gemäß Beispiel 1 eine signifikant höhere Dehngrenze (Rp0,2) sowie eine signifikant höhere Zugfestigkeit (Rm) im Vergleich zum Vergleichsbeispiel 1 (Legierung C44500, Stand der Technik) aufweist. Ein aus dieser Legierung hergestellter Draht oder eine andere aus dieser Legierung hergestellte Struktur besitzt somit einen deutlich größeren Widerstand gegen plastische Verformung und Versagen durch Bruch. Trotz der hohen Festigkeitswerte zeichnet sich die teilchengehärteten Legierung gemäß Beispiel 1 durch eine dennoch zufriedenstellende Bruchdehnung von 40 - 50 % aus, wodurch ein genügend hohes Umformvermögen für die Herstellung von Drahtgeflechten gegeben ist.

Tab. 2: Mechanische Eigenschaften und Korngröße einer teilchengehärteten Legierung (Beispiel 1) und einer teilchenfreien Legierung (Vergleichsbeispiel 1) im Zustand 100 % rekristallisiert durch Glühung 500°C, 3 h

|  | Vergleichsbeispiel 1 | Beispiel 1 |
|---|---|---|
|  | CuZn28Sn1P0,02 | CuZn28Sn1Fe0,25P0,2 |
| HV10 | 60 | 115 |
| 0,2% - Dehngrenze (MPa) | 102 | 234 |
| Zugfestigkeit (MPa) | 337 | 443 |
| Bruchdehnung (%) | 73.3 | 45.8 |
| Korngröße ($\mu$m) | 55 - 60 | 10 - 15 |

Aufgrund der in die Matrix eingelagerten Partikel wird das Kornwachstum bei der Rekristallisation der teilchengehärteten Legierung gemäß Beispiel 1 beschränkt. Dadurch ist die Korngröße dieser Legierung im rekristallisierten Zustand deutlich geringer als die der Vergleichslegierung gemäß Vergleichsbeispiel 1 (Legierung C44500), siehe Tabelle 2. Dies bewirkt ein homogenes Umformverhalten und verhindert die Ausbildung von Oberflächenunregelmäßigkeiten in stark plastisch verformten Bereichen ("Orangenhaut-Effekt"). Zudem ist besonders bei Strukturen mit geringen Abmessungen in einer oder zwei Dimensionen (Band, Blech oder Draht) eine geringe Korngröße wünschenswert, um die mittlere Zahl der Körner zwischen zwei Oberflächen möglichst groß zu halten. Dies erhöht die allgemeine Widerstandsfähigkeit der aus der Legierung hergestellten Strukturen. Aufgrund des hohen Gehalts an Chlorid-Ionen in Meerwasser sollte eine Legierung mit den Hauptelementen Cu und Zn für den Einsatz in maritimen Aquakulturen entzinkungsbeständig sein. Zur Prüfung auf Entzinkungsbeständigkeit wird in der Norm ISO 6509 ein Schnelltest beschrieben. Diese Prüfung wurde an den beschriebenen Mustern laut Tabelle 1 durchgeführt. Die Ergebnisse sind in Tabelle 3 dargestellt. Es zeigt sich, dass die teilchengehärteten Varianten, die sowohl Fe als auch P enthalten, eine mit einer teilchenfreien Legierung gemäß Vergleichsbeispiel 1 (Legierung C44500) vergleichbare besonders niedrige Entzinkungstiefe aufweisen, wenn das Verhältnis zwischen P- und Fe-Gehalt größer oder gleich 0,3 beträgt (Beispiele 1 und 2). Im Falle des Vergleichsbeispiels 2, bei dem das Verhältnis zwischen P-und Fe-Gehalt nur 0,03 beträgt, ist die Entzinkungstiefe dagegen auf einem vergleichsweise hohen Niveau.

Tab. 3: Maximale Angriffstiefen ($\mu$m) im Test auf Entzinkungsanfälligkeit nach ISO 6509 für verschiedene Beispiellegierungen

|  | Vergleichsbeispiel 1 | Vergleichsbeispiel 2 |
|---|---|---|
|  | CuZn28Sn1P0,02 | CuZn30Sn1Fe0,6P0,02 |
| Max. Angriffstiefe längs ($\mu$m) | 10 | 368 |
|  |  |  |
|  | Beispiel 1 | Beispiel 2 |
|  | CuZn28Sn1Fe0,25P0,2 | CuZn23,5Sn1Fe0,6P0,2 |
| Max. Angriffstiefe längs ($\mu$m) | 6 | Keine Entzinkung erkennbar |

Zur Überprüfung der Meerwasserbeständigkeit wurden Probenbleche der teilchenverstärkten Legierung gemäß Beispiel 1 und der teilchenfreien Legierung gemäß Vergleichsbeispiel 1 (Legierung C44500) für 15 Wochen in einem Prüfstand künstlichem Meerwasser nach DIN 50907 ausgesetzt. Hierbei handelte es sich um Bechergläser, die mit jeweils 1 Liter des künstlichen Meerwassers befüllt waren. Durch Magnetrührer wurde eine Strömungsgeschwindigkeit des künstlichen Meerwassers von 0,2 m/s eingestellt. Jeweils 4 Probenbleche der Abmessung 45 mm x 45 mm x 1 mm wurden unter der Wasseroberfläche, an der Wasserlinie und oberhalb der Wasseroberfläche befestigt. Jeweils nach sieben Tagen wurde das künstliche Meerwasser ausgewechselt. Aus dem Gewichtsverlust der Proben während des Experiments wurde eine mittlere Abtragsrate bestimmt, wobei nur die Probenfläche, die sich unter der Wasseroberfläche befand, berücksichtigt wurde. Vor der Gewichtsbestimmung nach dem Ende des Experiments wurde die Schicht aus Korrosionsprodukten, die sich auf den Proben befand, mit Zitronensäure abgelöst, da diese Schicht nicht zur Festigkeit des Materials beiträgt und damit bezüglich der verbleibenden tragenden Querschnittsfläche nicht berücksichtigt werden sollte. Das Ergebnis der Prüfung ist in Tabelle 4 dargestellt und zeigt, dass die Metallabgaberate der teilchenverstärkten Legierung gemäß Beispiel 1 überraschenderweise sogar niedriger liegt als die der teilchenfreien Legierung gemäß Vergleichsbeispiel 1 (C44500). In einer anschließenden Beurteilung der Probenbleche von den verschiedenen Positionen bezüglich der Wasseroberfläche in metallografischen Querschliffen, wurde bei der teilchenverstärkten Legierung gemäß Beispiel 1 ebenso wie bei der teilchenfreien Legierung gemäß Vergleichsbeispiel 1 kein selektiver Korrosionsangriff, beispielsweise Entzinkung oder interkristalline Korrosion festgestellt.

Tab. 4: Durchschnittliche spezifische Abtragsrate ($\mu$m/d) in einem 15-wöchigen Korrosionsversuch in bewegtem künstlichem Meerwasser nach DIN 50907, berechnet aus dem Gewichtsverlust der Proben. Der Metallanteil, der am Aufbau einer Deckschicht beteiligt ist, wurde bewusst dem Metallabtrag zugerechnet

|  | Vergleichsbeispiel 1 | Beispiel 1 |
|---|---|---|
|  | CuZn28Sn1P0,02 | CuZn28Sn1Fe0,25P0,2 |
| Mittlere spezifische Abtragsrate ($\mu$m/a) | 21,7 | 14,1 |

Als metallene Gegenstände kommen

a. Netze, Gewebe, Geflechte oder Gitter, die aus Drähten hergestellt werden, wie z. B.

- aufrollbare Netze oder Gewebe mit viereckigen Maschen ("Maschendrahtzaun"),
- aufrollbare Netze oder Gewebe mit sechseckigen Maschen ("Hasendrahtgitter"),
- Knotengeflechte,
- Well- oder Stanzgitter,
- Schweißgitter;

b. Gitter, die aus Band hergestellt werden, wie z. B.

- Streckmetall;

c. Stangen oder Profile,

- die als Befestigungselemente oder
- zur Stabilisierung von Geweben eingesetzt werden;

d. Rohre für

- Befestigungselemente,
- Schwimmkörper, Versorgungs- oder Entsorgungsleitungen

in Betracht.

**Patentansprüche**

1. Verwendung einer Kupferlegierung, bestehend aus (in Gew.-%):

51,8 bis 84,0 % Cu,
15,5 bis 36,0 % Zn,
0,35 bis 3,0 % Sn,
0,12 bis 1,5 % Fe,
0,02 bis 1,0 % P,
wahlweise noch 0,1 bis 2,0 % Al
wahlweise noch 0,05 bis 0,7 % Si
wahlweise noch 0,05 bis 2,0 % Ni
wahlweise jeweils noch 0,1 bis 1,0 % Mn, Co

wahlweise jeweils noch 0,01 bis 1,0 % As, Sb

und unvermeidbare Verunreinigungen,
wobei das Gefüge zu mehr als 95 % aus $\alpha$-Mischkristall besteht, in das zumindest Eisenphosphide und/oder Eisen als Ausscheidungspartikel eingelagert sind, und
wobei für das P/Fe-Verhältnis gilt: [P]/[Fe] > 0,25,
für metallene Gegenstände in der Aufzucht von im Meerwasser lebenden Organismen.

2.  Verwendung der Kupferlegierung nach Anspruch 1, **gekennzeichnet durch** einen Gehalt von 0,55 bis 1,5 % Fe.

3.  Verwendung der Kupferlegierung nach Anspruch 1 oder 2, **gekennzeichnet durch** einen Gehalt von

    0,7 bis 1,5 % Sn,
    0,55 bis 0,7 % Fe.

4.  Verwendung der Kupferlegierung nach einem der Ansprüche 1 bis 3, **gekennzeichnet durch** einen Gehalt von 21,5 bis 36,0 % Zn.

5.  Verwendung der Kupferlegierung nach Anspruch 4, **gekennzeichnet durch** einen Gehalt von 26,5 bis 35,0 % Zn.

6.  Verwendung der Kupferlegierung nach einem der Ansprüche 1 bis 5, **dadurch gekennzeichnet, dass** für das Verhältnis des Gehalts an P, As, Sb und des Gehalts an Fe, Ni, Mn, Co gilt:

$$[P + As + Sb]/[Fe + Ni + Mn + Co] > 0{,}25.$$

7.  Verwendung der Kupferlegierung nach einem der Ansprüche 1 bis 6, **dadurch gekennzeichnet, dass** die mittlere Korngröße kleiner als 20 $\mu$m ist.

8.  Verwendung der Kupferlegierung nach einem der Ansprüche 1 bis 7 für Netze, Gewebe, Geflechte und Gitter, die aus Drähten, Stangen, Rohren oder aus Metallbändern hergestellt werden.

**Claims**

1.  Use of a copper alloy comprising
    (in % by wt.):

    51.8 to 84.0 % Cu,
    15.5 to 36.0 % Zn,
    0.35 to 3.0 % Sn,
    0.12 to 1.5 % Fe,
    0.02 to 1.0 % P,
    also optionally 0.1 to 2.0 % Al
    also optionally 0.05 to 0.7 % Si
    also optionally 0.05 to 2.0 % Ni
    also optionally 0.1 to 1.0 % each Mn, Co
    also optionally 0.01 to 1.0 % each As, Sb

    and unavoidable impurities,
    wherein the structure comprises more than 95 % $\alpha$-solid solution in which at least iron phosphides and/or iron are deposited as precipitate particles and
    wherein the P/Fe ratio is: [P]/[Fe] > 0.25,
    for metallic objects in the breeding of organisms living in saltwater.

2.  Use of the copper alloy according to Claim 1, **characterized by** a content of 0.55 to 1.5 % Fe.

3. Use of the copper alloy according to Claim 1 or 2, **characterized by** a content of

   0.7 to 1.5 % Sn,
   0.55 to 0.7 % Fe.

4. Use of the copper alloy according to one of Claims 1 to 3, **characterized by** a content of 21.5 to 36.0 % Zn.

5. Use of the copper alloy according to Claim 4, **characterized by** a content of 26.5 to 35.0 % Zn.

6. Use of the copper alloy according to one of Claims 1 to 5, **characterized in that** the ratio of the content of P, As, Sb and the content of Fe, Ni, Mn, Co is:

$$[P + As + Sb]/[Fe + Ni + Mn + Co] > 0.25.$$

7. Use of the copper alloy according to one of Claims 1 to 6, **characterized in that** the mean grain size is smaller than 20 $\mu$m.

8. Use of the copper alloy according to one of Claims 1 to 7 for netting, cloth, meshwork and lattices which are made of wires, rods, pipes or metal strips.


**Revendications**

1. Utilisation d'un alliage de cuivre, constitué de (en % en masse) :

   de 51,8 à 84,0 % de Cu,
   de 15,5 à 36,0 % de Zn,
   de 0,35 à 3,0 % de Sn,
   de 0,12 à 1,5 % de Fe,
   de 0,02 à 1,0 % de P,
   éventuellement encore de 0,1 à 2,0 % d'Al
   éventuellement encore de 0,05 à 0,7 % de Si
   éventuellement encore de 0,05 à 2,0 % de Ni
   éventuellement à chaque fois encore de 0,1 à 1,0 % de Mn, Co éventuellement à chaque fois encore de 0,01 à 1,0 % de As, Sb

   et d'impuretés inévitables,
   la structure étant constituée jusqu'à plus de 95 % de cristal mixte $\alpha$, dans laquelle au moins du phosphure de fer et/ou du fer sont insérés comme particule de précipitation, et
   le rapport P/Fe valant : [P]/[Fe] > 0,25,
   pour des objets métalliques dans l'élevage d'organismes vivant dans l'eau de mer.

2. Utilisation de l'alliage de cuivre selon la revendication 1, **caractérisée par** une teneur de 0,55 à 1,5 % de Fe.

3. Utilisation de l'alliage de cuivre selon la revendication 1 ou 2, **caractérisée par** une teneur
   de 0,7 à 1,5 % de Sn,
   de 0,55 à 0,7 % de Fe.

4. Utilisation de l'alliage de cuivre selon l'une quelconque des revendications 1 à 3, **caractérisée par** une teneur de 21,5 à 36,0 % de Zn.

5. Utilisation de l'alliage de cuivre selon la revendication 4, **caractérisée par** une teneur de 26,5 à 35,0 % de Zn.

6. Utilisation de l'alliage de cuivre selon l'une quelconque des revendications 1 à 5, **caractérisée en ce que** pour le rapport de la teneur en P, As, Sb et de la teneur en Fe, Ni, Mn, Co :

$$[P + As + Sb]/[Fe + Ni + Mn + Co] > 0,25$$

est valable.

7. Utilisation de l'alliage de cuivre selon l'une quelconque des revendications 1 à 6, **caractérisée en ce que** la taille moyenne de grain est inférieure à 20 $\mu$m.

8. Utilisation de l'alliage de cuivre selon l'une quelconque des revendications 1 à 7 pour des filets, tissus, treillis et grilles, qui sont préparés à partir de fils, de barres, de tuyaux ou de bandes métalliques.

**EP 2 742 160 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1777311 A1
- EP 1290234 B1
- US 3816109 A
- US 6132528 A
- JP 10152735 A